(19) Europäisches Patentamt
European Patent Office
Office européen des brevets

(11) Publication number: 0 219 264 A1

(12) **EUROPEAN PATENT APPLICATION**

(21) Application number: 86307517.2

(51) Int. Cl.[4]: G 03 B 17/24

(22) Date of filing: 01.10.86

(30) Priority: 08.10.85 US 785466

(43) Date of publication of application: 22.04.87 Bulletin 87/17

(84) Designated Contracting States: AT BE CH DE ES FR GB GR IT LI LU NL SE

(71) Applicant: Presentation Technologies, Inc.,
743 North Pastoria Avenue
Sunnyvale California 94086(US)

(72) Inventor: Baker, Philip
917 Old Town Court
Cupertino California 95014(US)

(72) Inventor: Novicov, Aleksey
228 Bryant Street
Palo Alto California 94301(US)

(72) Inventor: Conti, Walter
164 Fern Court
Palo Alto California 94306(US)

(72) Inventor: Barsley, Paul
971 Moreno Avenue
Palo Alto California 84303(US)

(74) Representative: Williams, Trevor John et al,
J.A. KEMP & CO. 14 South Square Gray's Inn
London WC1R 5EU(GB)

(54) **Apparatus for generating color text and graphics on photographic media.**

(57) Apparatus for generating color slides or other photographic media containing character fonts and graphics images contains one or more character font sets on a transparent drum or disk carrier. Lines of text are entered by keyboard or the like into a data processor which stores them as character and position information. This information is then used to position and expose images of the selected characters from the carrier (24) onto photographic media by use of a moveable lens (36) and a shutter. An additional moveable drum or disk (26) may be used to provide different background color as well as character color. By holding the shutter open while a character or arbitrary shape is illuminated, two-dimensional graphics image can be recorded on the photographic media by controlling the movement of the lens in two dimensions. A method is also provided for providing a continuously variable transmission of light through a liquid crystal shutter to control exposure of the photographic media.

EP 0 219 264 A1

./...

44
26
43
25
41
30
45
31
28
46
48
54
201
36
52
50
40

FIG. 1.

SPECIFICATION

0219264

# APPARATUS FOR GENERATING COLOR TEXT AND GRAPHICS ON PHOTOGRAPHIC MEDIA

## BACKGROUND OF THE INVENTION

### 1. Field of the Invention

The present invention relates to preparation of photographic media, such as slides and foils, as are used for business meetings and other purposes. More particularly, the present invention relates to an apparatus for preparing color slides and other photographic media containing textual material and x-y addressable graphics for a variety of uses.

### 2. Background of the Invention

Photographic reproduction of alpha-numeric characters is known and currently in use, particularly in the fields of phototypesetting and microfilm technology. As used herein the term "alpha-numeric characters" includes logos and icons. Systems are known which transfer images of alpha-numeric characters from a cathode ray tube (hereinafter "CRT") to photographic media. Such systems are primarily used in the field of phototypesetting. These systems can be broken down into two categories: those with less than 1200 lines of resolution across a slide (low-medium resolution) and those with 2000 or more lines of resolution across a slide (high resolution). Typically, film resolution is limited at about 4000 lines of resolution across a 35 mm slide. One major drawback of low-medium resolution systems is that the resolution of the images produced on the film is limited by the raster scan resolution capability of the CRT used to generate the character image. Such systems perform adequately the task of conveying information, but they cannot meet the demand for high resolution text and graphics usable for creating high quality slides and photographic media suitable for presentations at business meetings and other similar applications.

Other problems inherent in low resolution, low cost systems which make use of CRT's in generating images to be projected onto photographic media include distortion, soft focus, exposure variations at edges and color impurity. Distortion of images is caused by the fact that the CRT is not flat but is curved and thus images generated on a CRT are likewise slightly curved making the generation of straight lines in all areas of the CRT next to impossible. Soft focus can occur in portions of CRT generated images because the spot size of the electron beam is larger at the edges than in the center of the CRT. Exposure variations at edges occur because the intensity of the projected image from the CRT can vary significantly from center to edge because the distance from the electron gun to the corner of the CRT is greater than the distance from the electron gun to the center of the CRT. Color impurity is caused by the use of additive color systems employing three filters as are in effect used in CRT's. Such systems can induce color fringing and edge effects due to variations in image size over time with exposures from each of the three filters.

Systems for generating high quality graphics are known, but such systems are generally complex and expensive, and generate graphic images on CRT screens or on X-Y plotters using a moving stylus. For example there are very high resolution CRT based devices available that are designed to image directly onto slide film. Typically 2000 to 4000 rastor scan lines across the

CRT are required in order to generate these high resolution images. CRT's with such high resolution are very expensive and systems employing them for the generation of high resolution images on film require a large amount of sophisticated and expensive electronics in order to translate the graphic information from the host computer to images on film. The inventors are unaware of non-CRT based apparatus which is capable of generating both high resolution alpha-numeric characters and graphics for printing on colored photographic media such as 35 mm slides, or larger transparent foils.

The use of high-resolution optical transparencies containing type font shapes is known for applications such as phototypesetting. The use of high-resolution optical transparencies as the source for alpha-numeric images eliminates the need for a high-resolution CRT and for the electronic control circuitry necessary in order to make use of such a high-resolution CRT. A high-resolution optical transparency is stored on a photographic or other similar media. By projecting a light from the back of the high-resolution optical transparency, a high-resolution image of the desired character, icon, logo or other image can be readily obtained, focused, and projected onto the photographic media.

## SUMMARY OF THE INVENTION

In a first aspect of the present invention, a system is disclosed for composing, generating and printing high resolution alpha-numeric characters and graphics. Textual material and information representative of graphics shapes are entered into a data processing device, such as a personal computer to which this invention is attached. A moveable disk or drum media contains transparencies of one or more type-font sets of alpha-numeric characters, symbols, logos, etc. at different radial or axial positions. The media is positioned by signals from the data processor so that the desired character is aligned with a light source, an aperture, a shutter, a lens moveable in the X-Y plane, and, optionally, a moveable disk or drum containing optical filter material (hereinafter "filter wheel") for defining the color of the image exposed. In response to signals from the data processor, the lens positions an image of the selected character on a selected location of a photographic media such as standard 35 mm slide film. The character image is exposed and other characters may be similarly selected, positioned and exposed. A color may be selected by positioning the color filter wheel in the light path.

Different graphics images may be created by selectively moving the X-Y moveable lens during the exposure of, for example, the period or other selected graphic elements which may be included on the disk or drum for that purpose.

In this manner, the direct plotting of x-y addressable graphics onto photographic media with light is accomplished.

In a second aspect of the present invention, a method useful for controlling a liquid crystal shutter is disclosed. A liquid crystal plate is utilized as a shutter to attenuate light transmission from a light source to a photographic media. This system is utilized in addition to an opaque capping blade because even in the minimum transmission orientation, the liquid crystal plate is not perfectly opaque. The amount of light passing through the liquid crystal shutter is controlled and modulated by a microprocessor. The amount is a function of the combination of film type and filter color.

Accordingly, it is an object of the present invention to provide an apparatus that is capable of generating photographic media having both high-resolution graphics and high-resolution textual material in a variety of foreground and background colors.

Another object of the invention is to provide a continuously variable transmission of light through a liquid crystal shutter.

Other and further objects and advantages will appear hereinafter.

## BRIEF DESCRIPTION OF THE DRAWINGS

FIG. 1 is a perspective view of the hardware portion of the preferred embodiment of the present invention showing the relationships between its components.

FIG. 2 is a schematic diagram of a cross-section of the apparatus.

FIG. 3A shows a character disk suitable for use with the present invention.

FIG. 3B shows a filter wheel suitable for use with the present invention.

FIG. 3C shows an aperture disk suitable for use with the present invention.

FIG. 3D is a cross-sectional view of one of the apertures depicted in FIG. 3C taken along lines 3D-3D of Figure 3C.

FIGS. 4A-4E are flow chart diagrams detailing the operation of the software that controls the apparatus.

FIG. 5 is a flow chart showing the orientation of the microprocessor control links which control x and y motor and character wheel movement.

FIG. 6 is a flow chart showing the function of the Real Time Clock Interrupt Function Routine.

FIG. 7 is a side elevation of the x-y lens stage mechanism.

FIGS. 8A-8D are a series of diagrams detailing the operation of the drive band mechanism.

FIG. 9A is a perspective view showing the character disk positioned in the retention mechanism.

FIG. 9B is a side elevation showing how the character disk seats in the retention mechanism.

FIG. 9C is a top plan view showing the character disk positioned in the retention mechanism.

FIG. 10 is a timing diagram for the operation of the mechanical and liquid crystal shutters.

FIGS. 11A-11E are a series of diagrams detailing the operation of the character wheel alignment sensor system.

FIG. 12 contains equations used to control the drawing of arcs, lines and circles.

## DETAILED DESCRIPTION OF THE PREFERRED EMBODIMENT

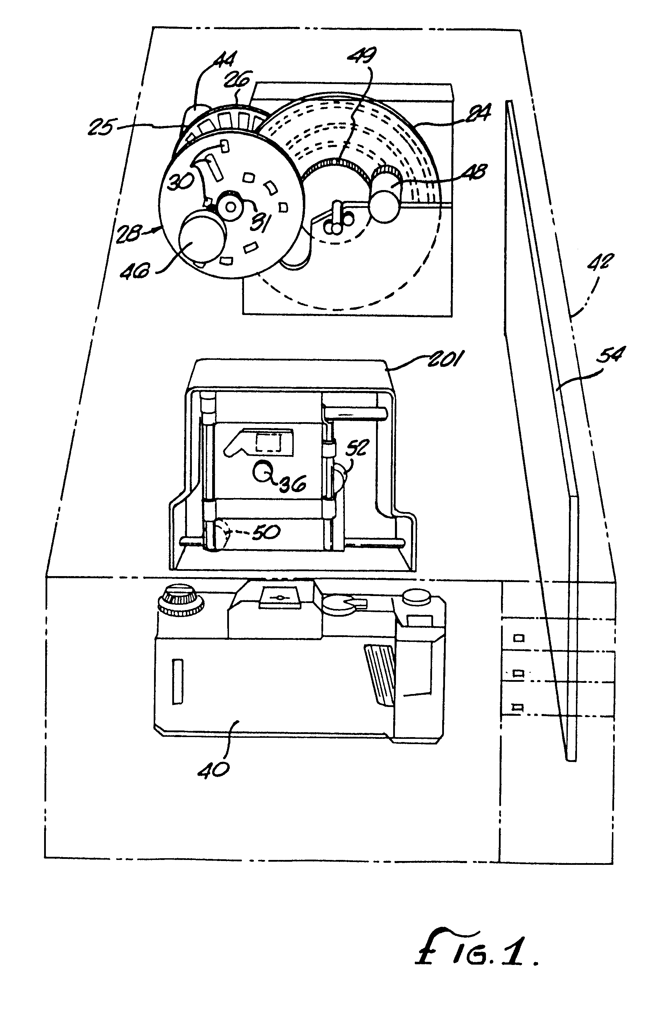

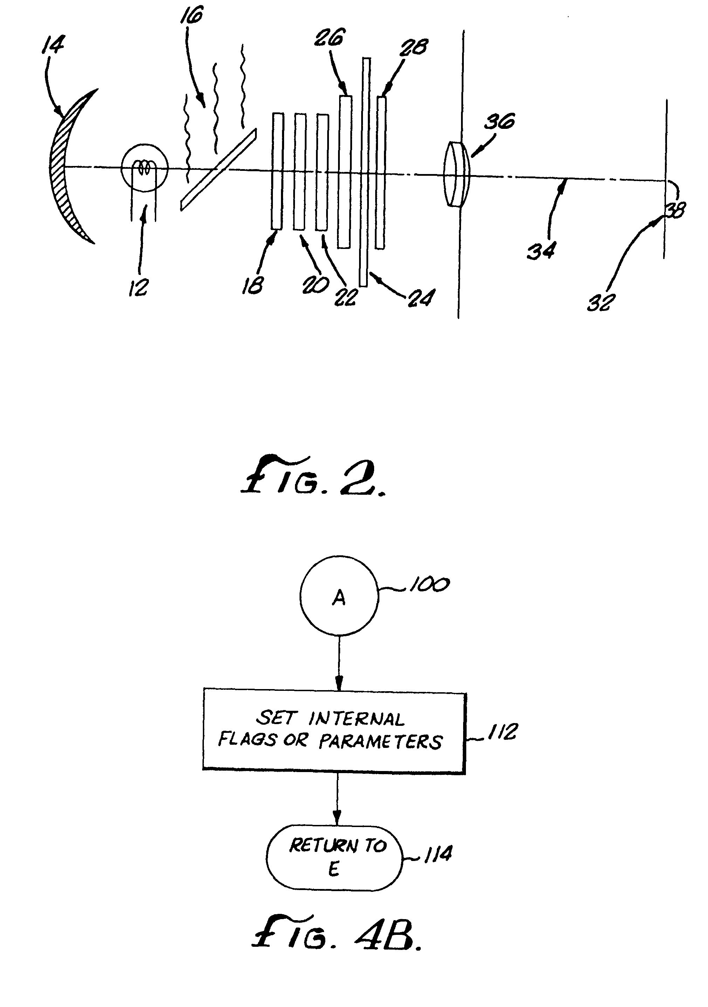

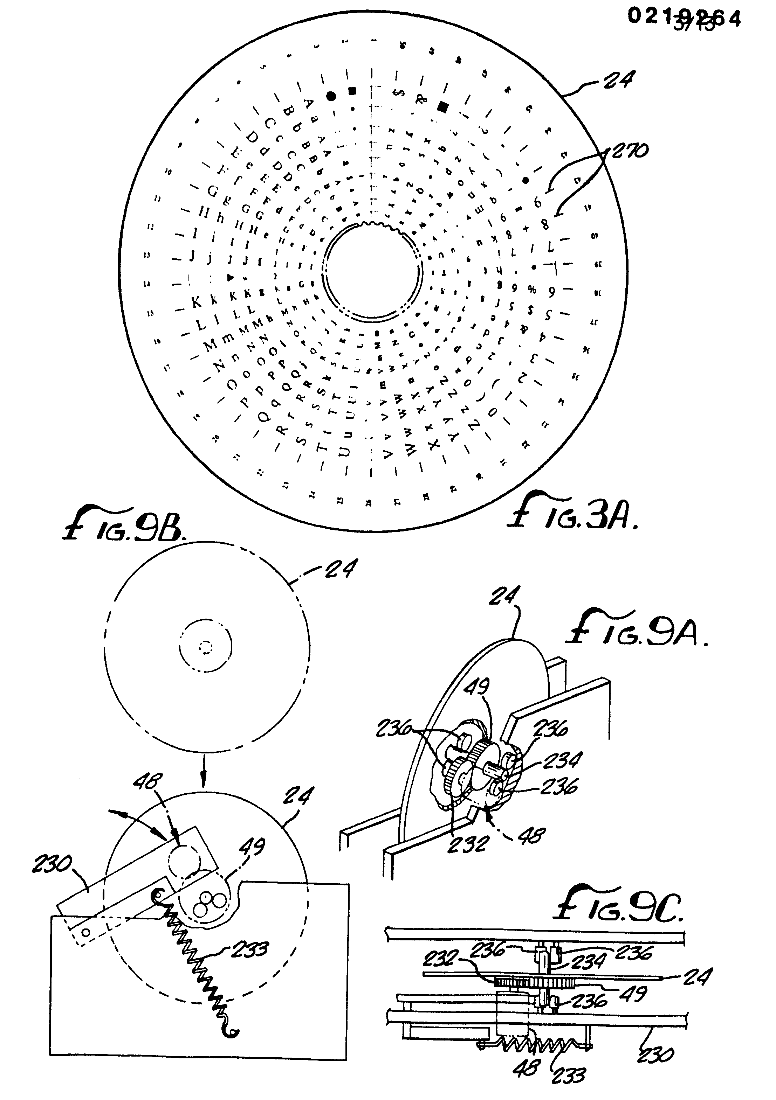

The apparatus has been designed to be compact and lightweight for use on a desk and easy transportability. Turning in detail to Fig. 1 (a perspective view of the hardware portion of a preferred embodiment showing the relationship between its components), and Fig. 2 (a schematic diagram of a cross-section of the apparatus), it is seen that the apparatus includes a light source which may be a tungsten-halogen light source 12, a light reflector 14, a heat reflector 16, a heat absorber 18, a liquid crystal shutter 20, a light diffuser 22, a removable and interchangeable alpha-numeric character wheel 24, a color filter wheel 26 having filters 27 and an aperture wheel 28 having apertures 30, therethrough appropriate to allow light to pass therethrough to expose the photographic media located at the film plane 32. The aforementioned light source 12, light reflector 14, heat reflector 16, heat absorber 18, liquid crystal shutter 20, light diffuser 22, character wheel 24, filter wheel 26 and aperture wheel 28 may be aligned co-axially or on substantially parallel axes with overlap along the axis of the light path 34. Light passes from light source 12 and off of light reflector 16 along light path 34 through heat reflector 16 where heat is reflected off of light path 34, through heat absorber 18 where additional heat is absorbed and then through liquid crystal shutter 20, light diffuser 22 where the light is diffused color filter wheel 26, character wheel 24, aperture wheel 28, and into lens 36, movable in two directions which are substantially perpendicular to the light path. The light passes through the lens and is focused by the lens onto a focus area 38 where the image is to be recorded on a photographic media 32 which is contained in a camera 40. In a preferred embodiment, a commercially available 35 mm camera back having fully automatic winding and film transport mechanism may be employed although those skilled in the art will readily appreciate that other cameras could be employed. The entire apparatus is housed in a light tight chassis 42 to prevent spurious light from exposing the photographic media. Stepping motors 44, 46, and 48 are utilized to position respectively the color filter wheel, the aperture wheel, and the character wheel. Stepping motors 60 and 52 under micro-stepping control are utilized to position the lens in two dimensions referred to herein as the X (left-right) and y (up-down) dimensions. Electronic Circuitry for powering and controlling the apparatus is contained on a circuit board 54.

The stage housing 201 contains the lens 36 which is used to position the image on the photographic media 32. The lens is moveable in two substantially perpendicular directions, referred to herein as x and y, which are themselves substantially perpendicular to the light path 34. The lens used in a preferred embodiment may have a focal length of 50 millimeters and a focal ratio of f8, and has its center positioned 75 millimeters from the plane containing photographic media 32 and 150 millimeters from character wheel 24, although those skilled in the art will readily appreciate that other configurations of focal length and focal ratio may be used depending upon the size of employed and dimensions of the apparatus.

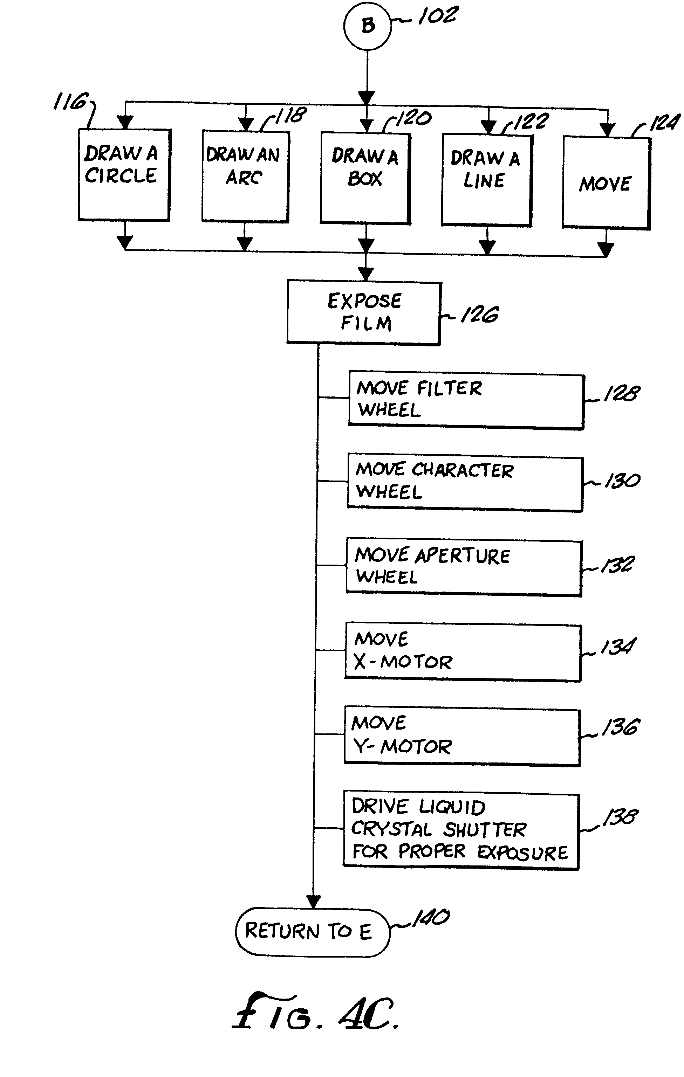

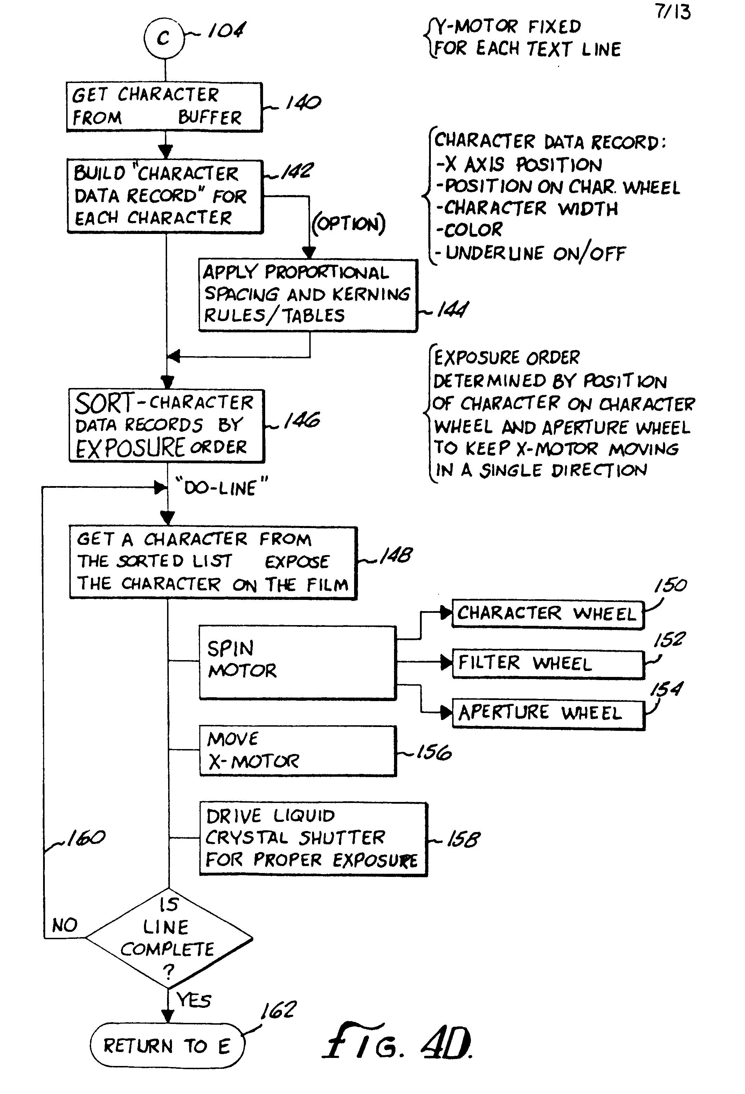

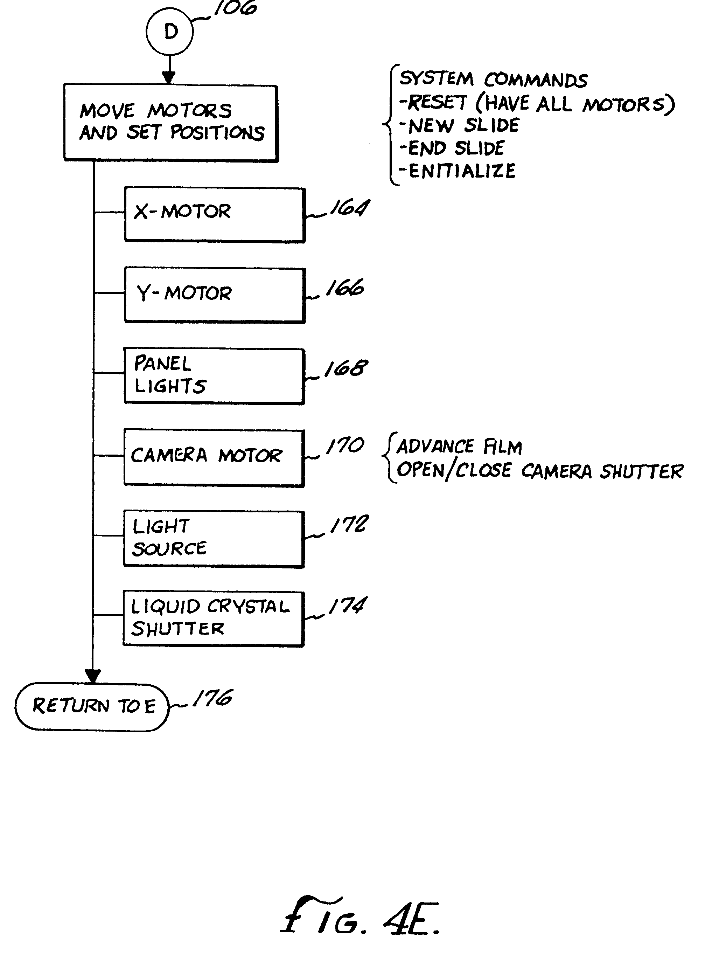

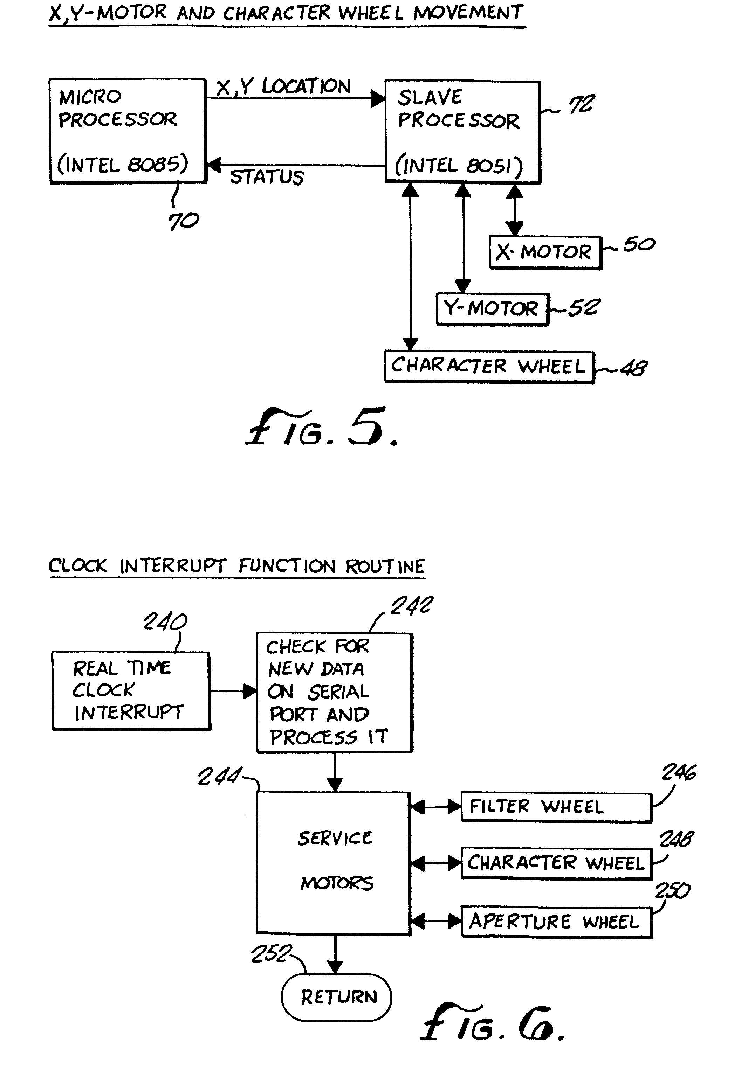

Turning now to Fig. 7, stepping motor 52 (Fig. 1) under microprocessor control controls the y (up-down) position of the stage 205 containing the lens 36. Stepping motor 50 controls the x (left-right) position. The stage moves up and down on and is kept in registration by tracks 207, the stage moves left and right on and is kept in registration by tracks 209. Movement is transferred from the motors 50 and 52 to the moveable stage 205 by band drive mechanisms detailed in Fig. 8. A relatively thin band 211 which may be made of metal is rigidly fixed to the stage at end 213 and is spring mounted to the stage at another end 215 with spring 217. The band wraps around a wheel 219 and counterclockwise drive motion of the wheel as in Fig. 8-2 causes the stage to move to the right as defined in Fig. 8-2. Similarly, clockwise drive cause stage motion to the left (Fig. 8-3). The wheels 219 are engaged by the stepping motors 50 and 52 to effect x-y position control of the stage. When the stage is driven all of the way to its lowest position, the lens 36 is no longer in the light path and the large aperture 221 may now allow light to pass through to expose the entire photographic frame, as is desirable when exposing a background color. An auxillary shutter 223 covers the aperture in normal use and snaps out of the way when the stage is positioned at its lowest point.

In order to expose a background color on photographic media 32 large aperture 221 is opened and auxiliary shutter 223 is snapped out of the way. Color filter wheel 26 is positioned so that one of the color filters 27 is positioned in the light path. The photographic media 32 is exposed and may be additionally exposed with other color filters in order to additively form a background color not found on color filter wheel 26.

The lens control motors are micro-stepped in order to achieve higher resolution images with improved positional accuracy.

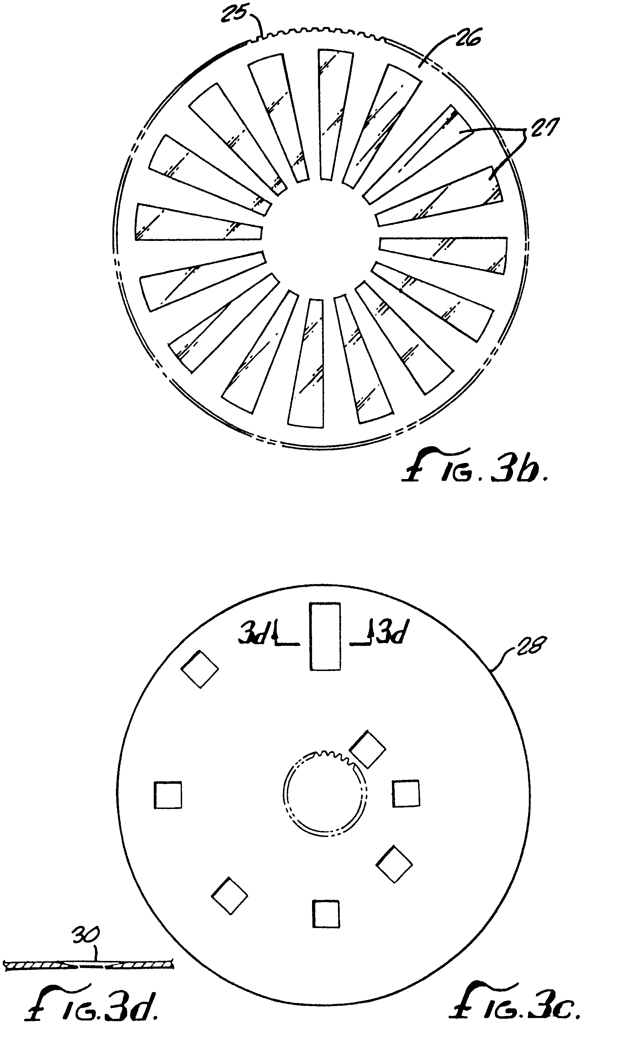

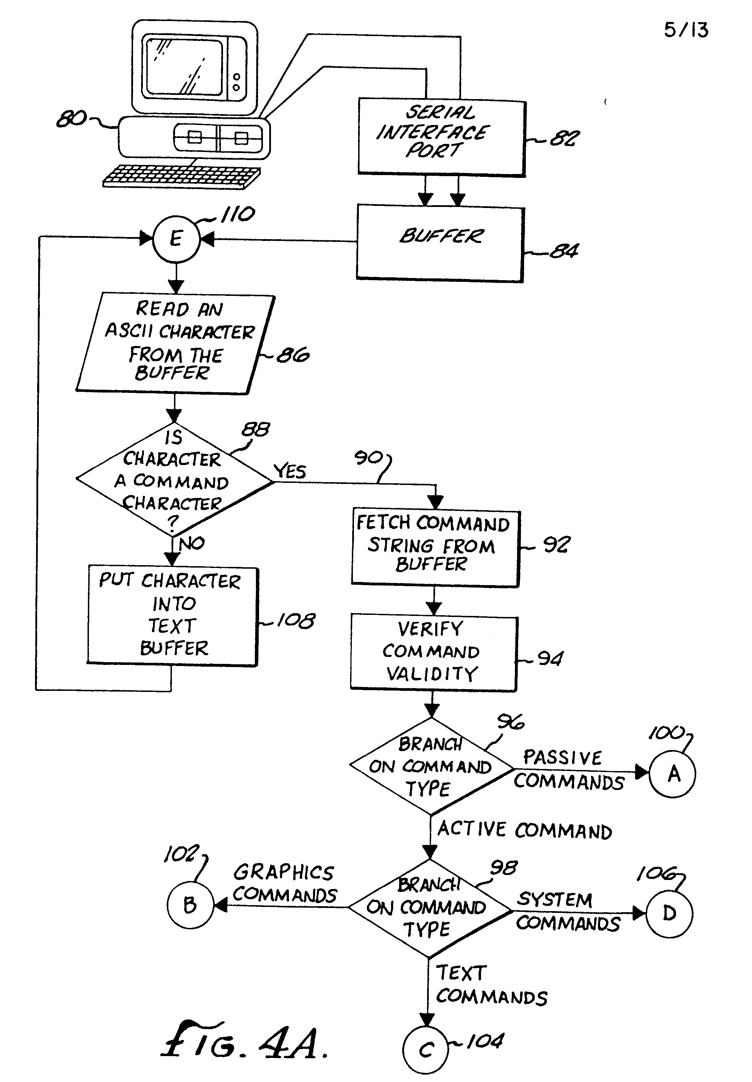

Microstepping of the motors is achieved by dividing full steps of the stepping motors into 32 substeps or microsteps as is well known in the prior art and described in the article "Microstepping of Step Motors," Superior Electric Company, Connecticut, 1978 which is hereby incorporated herein by reference. Actual control of the microstepping is handled by microprocessors used in a conventional manner. In an actual embodiment of the invention, as shown in Fig. 5, an Intel Model 8085 Microprocessor 70 controls most functions of the apparatus and a slave processor 72, Intel Model 8051 controls the actual movement, including microstepping, of the x-motor 50, the y-motor 52, and the character wheel positioning motor 48. The x and y location that is desired is relayed to slave processor by the microprocessor and status information is relayed back to the microprocessor by the slave processor indicating final motor position information and the like.

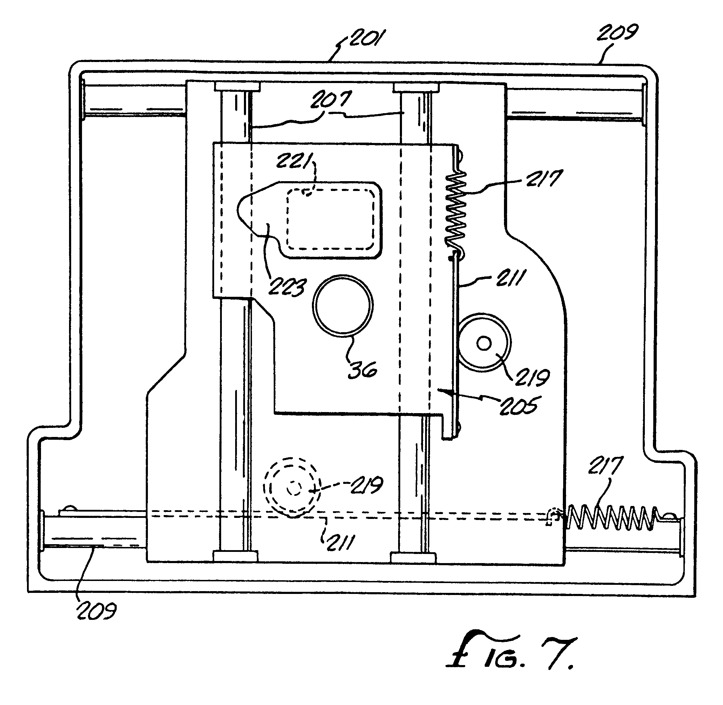

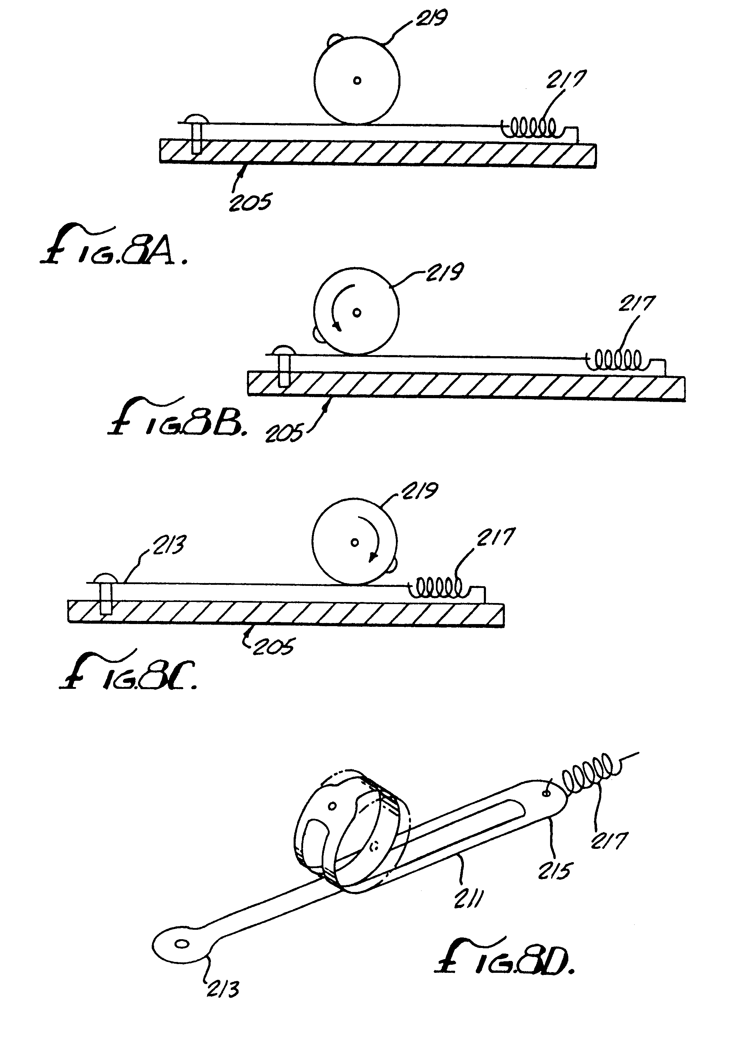

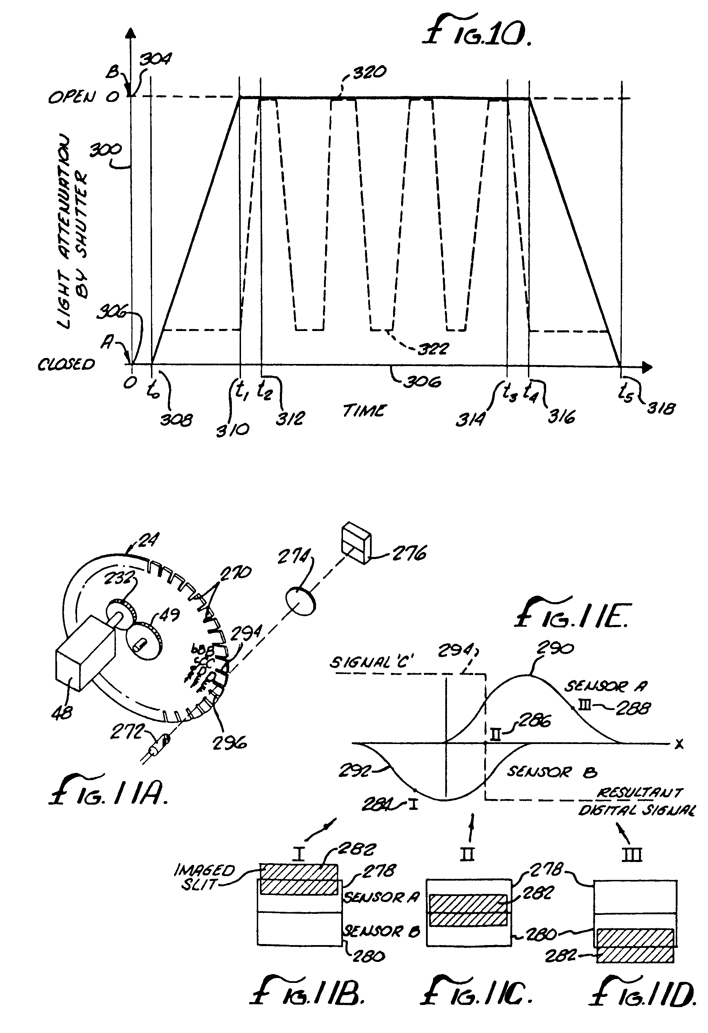

As detailed in Fig. 11-A, digital feedback via a split cell sensor 276 and microstepping are used to position the character wheel 24 more accurately than would be possible with a simple open-loop stepping motor. Servo marks 270 are placed on the outer perimeter of character wheel 24. Infrared light emitting diode 272 is located on one side of character wheel 24 and positioned to project infrared light through servo marks 270. A lens is located on the side of character wheel 24 opposite infrared light emitting diode 272 and is positioned to focus light from diode 272 upon a split cell sensor 276. As character wheel 24 is rotated past the sensor, outputs as detailed in Figs. 11-B, 11-C and 11-D are generated causing corresponding electronic signals as depicted in Fig. 11-E. In case I as depicted in Fig. 11-B, all of the image 282 of servo mark 270 is projected onto sensor A 278 of split cell sensor 276 causing the output signals in Fig. 11-E in the area designated I 284. In this case, character wheel 24 is out of alignment. In case II as depicted in Fig. 11-C, the image 282 of servo mark 270 is projected equally onto sensor A 278 and sensor B 280 of split cell sensor 276 causing the output signals in Fig. 11-E in the area designated II 286. In this case, character wheel 24 is in alignment and exposure may proceed. In case III as depicted in Fig. 11-D, all of image 282 of servo mark 270 is projected onto sensor B 280 of split cell sensor 276 causing the output signals in Fig. 11-E in the area designated III 288. In this case, character wheel 24 is out of alignment. Each sensor half, sensor A 278 and sensor B 280 produces an analog output (290 and 292 respectively) proportional to the amount of imaged servo mark 282 incident on it. The two offset signals 290 and 292 are combined electronically to produce a digital signal 'C' 294 which is fed back to the controlling microprocessor as an indication of character wheel 24 alignment status. The character wheel 24 is correctly aligned when the digital signal 294 changes state 286. Thus typically, in order for character wheel 24 to be moved from one character, e.g. 294 to another character, e.g. 296, the motor 48 will be stepped the number of whole steps to get from the first character 294 to the second character 296, then, because of anticipated positioning error in the system, the stepping motor is placed under microstepping control and split cell sensor 276 is analyzed by the microprocessor. The microprocessor analyzes the signals from split cell sensor 276 to determine in which direction to microstep the character wheel positioning motor 48. When the digital signal 'C' 294 changes state, the character wheel 24 is aligned to within plus or minus one half microstep and the exposure may proceed. The size of the microstep is chosen based upon the desired tolerances of the system.

Repeatability errors are positional errors involving the inability of an object under the control of stepper motors to return to exactly the same X-Y position repeatedly.

In order to minimize repeatability, the stepping motors that control the position of the lens on the x-y stage are controlled in a unique way. For each line of text, the characters to be exposed on that line are exposed upon the photographic media in an order that causes the X motor, i.e., the motor that controls the left-right position of the lens, to move exclusively and incrementally in one particular direction. In this way, the motor is never required to return to a prior position and the possibility of registration errors due to an inability to return to the same exact position is thus eliminated.

Software described below causes the lines of text to be sorted so that characters are printed in the order that allows the X motor to be driven continuously in one direction. This sorting is required because the character wheel has characters at different radii and thus it is the case that certain textual material if exposed context-sequentially on the photographic media would require the X motor to backtrack frequently in order to correctly position all of the characters on the photographic media.

Fig. 3A shows a positive of the character position layout for a typical alpha-numeric character wheel as used in a preferred embodiment. The character wheel serves the function of generating images. In an actual embodiment, the character wheel images are stored in photographic positive format. Character wheels are interchangeable and each different character wheel may require different exposure and positioning information to be available to the apparatus. In order to enable the apparatus to properly locate and expose characters from different character wheels, the information includes such things as style, size, height, and width for all character wheels may be stored in memory within the apparatus or it may be downloaded as needed from a host computer system to the apparatus with each change of character wheel. This information includes such things as spacing, kerning, number of characters per line and so forth. Kerning is a well-known method of achieving enhanced proportional spacing which take into account, among other things, the relationship shapes of adjacent characters. Positioning of the character wheel is accomplished by stepping motor 48 which engages a gear 49 located about the axis of the character wheel. As shown in Figs. 9A, 9B and 9C, the character wheel is removable and seats into a retaining mechanism. A member 230 to which is attached the stepping motor 48 is biased by spring 233 so that when the character wheel is inserted into position, the member snaps down on it and causes the teeth of a gear 232 attached to the stepping motor to engage the teeth of gear 49 providing drive to the character wheel. The character wheel has an axle 234 which rides on crowned bushings 236 to provide accurate support of the character wheel.

The filter wheel 26 shown in Fig. 3B is a disk having a number of optical colored filters associated 27 with it. In an actual embodiment, provision is made for as many as 16 different color filters. Upon command, a colored filter may be rotated into the light path in order to provide a color to the image to be exposed. Provision is made to optionally expose one or more background colors initially and then to individually determine the color of the characters or images being exposed. Once a background color has been exposed, character or image colors are then determined by placing the appropriate filter in the path of the light that individual characters or images are exposed with. Exposure times and the degree of transmission of the Liquid Crystal Shutter are determined by a microprocessor. In addition to the several color filters provided, provision is made for virtually any color to be exposed on the photographic media by appropriately exposing an image with each of the red, green and blue filters provided for this purpose as is well known in the art. Information relating to the filter wheel and the particular color combination are also stored in firmware within the apparatus. Positioning of the filter wheel is accomplished by stepping motor 44 which engages a gear 25 located about the axis of the aperture wheel.

Referring now to Fig. 3C, the aperture wheel 28 has at least one aperture 30. The aperture wheel is used to select the tract and as a capping blade and works in conjunction with the liquid crystal shutter to control the exposure of the film. As can be seen in Fig. 3D, the width of the aperture disk narrows in the vicinity of the aperture 30. Positioning of the aperture wheel is accomplished by stepping motor 46 which engages a gear 31 located about the axis of the aperture wheel. In the preferred embodiment, the aperture wheel contains a number of apertures which are conveniently located on the aperture wheel so as to provide an aperture for each track of characters on the character disk and several positions where the aperture wheel is closed so that it can be closed quickly regardless of the character/aperture configuration chosen.

Referring now to Fig. 4-A, the apparatus is controlled with a microprocessor, such as an Intel Corporation Model 8085 Microprocessor. A host computer 20, such as an IBM Personal Computer is connected to the apparatus via a standard RS-232-C-type Asynchronous Serial Port 82. A Parallel Interface Port or other type of Interface may also be utilized to connect the apparatus to the host computer. The microprocessor then causes characters to be read from the interface port into a buffer 84 which is a storage device located within the apparatus. The buffer stores characters for use later by the apparatus.

Software executed on the microprocessor then causes a character to be read from the buffer 86. A determination is made as to whether the character constitutes part of a command string to the apparatus or not 88. If it is part of a command string, the software branches as to a routine which recovers the command from the buffer 92, verifies the validity of the command 94, and then branches 96, 98 to portions of the program designed to respond to the various valid commands 100-106. If the character read is not part of a command string, then the character is stored in a text buffer 108 for later printout on photographic media and control returned to location E 110 for the reading of another character.

Commands to the apparatus are of two primary types, active and passive. Passive commands cause control to pass to location A 100 for further processing. Active commands are parsed 98 into three groups, graphic commands with control transfer to location B 102, text commands with control transfer to location C 104, and system commands with control transfer to location D 106. Passive commands set internal flags, indicators or parameters such as color, size, underline-on, film type, drawing stylus selection, margins, pitch, font type and the like. Active commands have a physical result such as causing motors to be activated and the like.

On Fig. 4-B location A is depicted 100. Internal flags and parameters are set 112 according to the commands received. Control is then returned 114 to location E 110.

On Fig. 4-C location B is depicted 102. At this portion of the software, graphics commands are executed and include instructions for drawing circles 116, arcs 118, boxes 120, lines 122 and moving the lens without exposing the film 124.

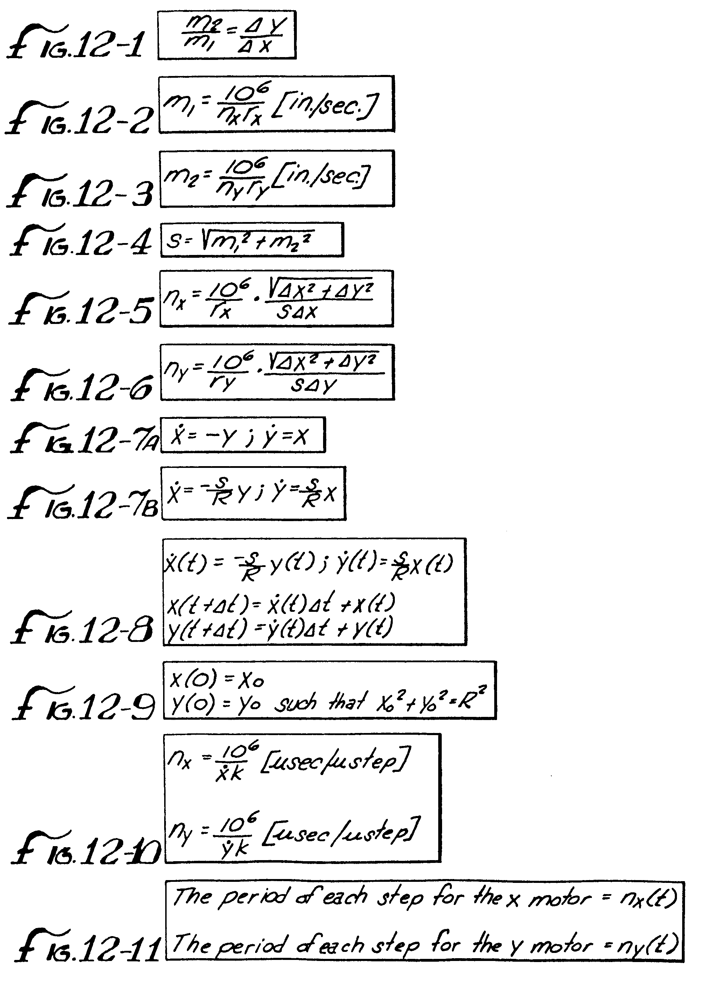

The actual drawing of circles, arcs, lines and movement of the lens in straight lines can be broken into two problems which are both solved by the microprocessor. These are the drawing of lines, or movement in a line without drawing, and the drawing of circles, or movement over part of a circle to generate an arc. Equations are in Fig. 12 and will be referred to 12-1, 12-2, etc.

First the case of lines will be considered:

n(x) is defined as the x-motor pulse period in microseconds per microstep.

n(y) is defined as the y-motor pulse period in microseconds per microstep.

m(1) is defined as the x-motor speed over the photographic media in inches per second.

m(2) is defined as the y-motor speed over the photographic media in inches per second.

s is defined as the speed of the light beam over the plane of the photographic media in half steps per second.

r(x) is defined as the resolution of the x-motor in half steps per inch.

r(y) is defined as the resolution of the y-motor in half steps per inch.

To draw a straight line as represented by the equation 12-1 where delta-x and delta-y define the difference of the endpoints of the line being drawn, m(1) is solved for as in equation 12-2 and m(2) is solved for as in equation 12-3. In order to obtain a constant, is solved for as in equation 12-4. Substituting, n(x) and n(y) are solved for as in equations 12-5 and 12-6 respectively. Thus knowing delta-x and delta-y and n(x) and n(y), the stepper motors can be commanded to move the lens in a straight line.

Now the case of circles and arcs (partial circles) will be considered:

R is defined as the circle radius in half steps.

x is defined as the x-motor position in half steps.

y is defined as the y-motor position in half steps.

x-dot is defined as the x-motor speed in half steps per second.

y-dot is defined as the y-motor speed in half steps per second.

A circle can be represented by the set of coupled, first order, differential equations shown in equation 12-7A or equivalently as in the equations shown in equation 12-7B. To draw a circle, the initial value problem presented in Equations 12-8 must be solved with the initial conditions as set forth at 12-9. Since n(x) and n(y) are as set forth in equations 12-10 where k is defined as the number of microsteps per half step, a circle can be drawn by commanding the x and y stepper motors to move, independently, one step at a time, with the period of each step for the x-motor and the y-motor as set forth in equations 12-11. Because the speed, s, is constant for the reasons stated above, time (t) is proportional to arc length. Thus, equations 12-8 can also be used to draw arcs. The advantages of drawing circles and arcs in this manner include: enhanced speed, because to calculate the period of each step requires only one division and some additional operations to be carried out by the microprocessor, and smooth circles may be achieved without the use of trigonometric functions such as sine and cosine. In accordance with drawing the above graphics images, film may be exposed 126, the filter wheel moved 128, the character wheel moved 130, the aperture wheel moved 132, the x-motor moved 134, the y-motor moved 136, and the liquid crystal shutter driven 138. Control is then returned 140 to location E 110.

On Fig. 4-D location C is depicted 104 at which point in the software, text commands are processed and text is caused to be output to the photographic media. First a character is obtained from the buffer 140, a character data record is established for each character in a line 142. Optionally, proportional spacing and kerning rules are applied 144 to enhance the visual appearance of the output. Kerning rules simply dictate the relative position of certain alphanumeric characters with respect to adjacent alpha-numeric characters for enhanced visual appearance and are well known in the art. Characters on a line of text are then sorted 146 so that they will be exposed in an order that allows the x-motor to be driven continuously in one direction. At this point the line of text is ready to be output to the photographic media. The y-motor is located at the position of the desired line of text. A character is obtained from the sorted list 148 and exposed upon the film. Position information is determined from the character data record. Exposure information may be determined from film speed, filters selected and character chosen. Exposure information is used by the liquid crystal shutter driver to determine the average transmissivity and length of exposure, the character wheel is positioned 150, the filter wheel is positioned 152, the x-motor is then positioned 156, the aperture wheel is positioned to an appropriate "open" position 154, and the exposure is made by driving the Liquid Crystal Shutter 158, then the aperture wheel is repositioned to an appropriate "closed" position". If the line is not complete 160, the process repeats until the line is complete. Then control returns 162 to location E 110.

Fig. 4-E illustrates the portion of the software at location D 106 that processes system commands. System commands include: Reset (return all lens position motors to their starting positions); initiate a new slide; end a completed slide; initialize; advance film; and open/close shutter. These commands are parsed at D and the appropriate control signals are generated to control the x-motor 164, the y-motor 166, panel indicator lights 168, camera motor 170, light source 172, and liquid crystal shutter 174. Control returns 176 to E 100 when the system command has been processed.

The shutter mechanism consists of two parts. The first part is a mechanical aperture wheel 28, also referred to herein as a mechanical shutter and a capping blade. Aperture wheel 28 contains apertures 30. The second part of the shutter mechanism is a liquid crystal shutter 20 (hereinafter sometimes referred to as LCS) which is capable of being driven by opening it (making it transparent) and closing it (making it relatively opaque). The parent and opaque states much more quickly than can the capping blade 28, however, the capping blade can achieve essentially complete attenuation of a light signal whereas the LCS 20 can only partially attenuate a light signal. Thus in order to achieve precise control of the amount of light travelling through the shutter mechanism, both the LCS 20 and the capping blade 28 may be used. The liquid crystal shutter described herein is fabricated of two liquid crystal plates of length 1.5, width .4" and thickness .150". It is obtainable from the Tektronix Corporation under the designation PI-CELL. It will be readily apparent to those skilled in the art that other models and configurations may be used depending upon the characteristics of the photographic media to be utilized and the dimensions of the apparatus.

Fig. 10 details the timing operation of the shutter mechanism. Vertical axis 300 represents the quantity of relative attenuation of light passing through the shutter mechanism achieved by the shutter mechanism. The highest degree of attenuation is indicated at A 302 and the least at B 304. The horizontal axis 306 represents time in the conventional manner. At A 302, both the capping blade 28 and the LCS 20 are closed and no light is allowed to pass through the shutter mechanism. At t(o) 308 the mechanical shutter starts to open. At t(1) 310 the mechanical shutter is fully open and the LCS 20 starts to open. At t(2) 312 the LCS 20 is fully open. At t(3) 314 the LCS 20 starts to close just prior to termination of exposure. At t(4) 316 the LCS is closed and the capping blade 28 starts to close. At t(5) 318 the capping blade 28 is fully closed and the exposure is completely terminated. Between t(2) 312 and t(3) 314 the LCS 20 may be modulated between the open state 320 and the closed state 322 one or more times in order to precisely control the total amount of light passing through the shutter mechanism. It will be readily apparent to those skilled in the art that the number of times that the LCS is modulated and the timing of the modulating will depend upon the dimensions of the apparatus, overall light attenuation in the apparatus and the characteristics of the photographic media in use.

A real time clock interrupt function routine is provided in order to take advantage of microprocessor interrupts to continuously check for new commands or data and service the step motors. As shown in Fig. 6, on an interrupt 240, the buffer is checked for new data or commands 242 and then motors are serviced if required 244, this included the filter wheel 246, the character wheel 248, and the aperture wheel 250. Control then returns 252 to the point in the software where the interrupts was encountered.

Thus an apparatus for generating color text and graphics on photographic media has been disclosed. A method is also disclosed which provides a continuously variable transmission of light through a liquid crystal shutter. While embodiments and applications of this invention have been shown and described, it would be apparent to those skilled in the art that many more modifications are possible without departing from the inventive concepts herein. The invention, therefore, is not to be restricted except in the spirit of the appended claims.

CLAIMS

1. Apparatus for generating photographic media containing images of alpha-numeric characters including:

data entry means for entering information corresponding to identity and position of a plurality of selected ones of said alpha-numeric characters to be placed on said photographic media;

storage means for storing said information;

processing means for converting said information into output signals representing said identity and position;

stationary photographic recording means for recording images of selected ones of said alpha-numeric characters on to said photographic media including means for holding said photographic media in position for light exposure, and shutter means for controlling the time of light exposure of said photographic media;

a light source;

moveable image generating media having transparent and opaque regions in predetermined areas, said regions forming silhouettes of at least one set of said alpha-numeric characters, said moveable image generating media being responsive to a first portion of said output signals to position a selected one of said silhouettes such that light from said light source passes through said selected one of said silhouettes to form a shaped light beam;

image positioning means, including focusing means, responsive to a second portion of said output signals, for positioning and focusing said shaped light beam onto a selected area of said photographic media;

control means associated with said processing means for controlling said shutter means to produce an exposed image of an alpha-numeric character from said shaped light beam on said photographic media.

2. The apparatus of claim 1 wherein said apparatus additionally includes means for generating photographic media containing graphic images.

3. The apparatus of claim 1 wherein said light source comprises a tungsten-halogen lamp.

4. The apparatus of claim 1 wherein said light source comprises a strobe lamp.

5. The apparatus of claim 1 wherein said shutter means comprises a liquid crystal shutter.

6. The apparatus of claim 5 wherein said shutter means additionally includes an aperture wheel interposed between said photographic media and said light source, said aperture wheel having appropriately sized apertures for exposing the alpha-numeric characters on said image generating media.

7. The apparatus of claim 6 wherein said image generating media is removable.

8. The apparatus of claim 2 wherein said image positioning means positions said focusing means.

9. The apparatus of claim 8 wherein said focusing means is a lens.

10. The apparatus of claim 7 wherein said control means additionally comprises processing means for controlling said shutter means to produce an exposed graphic image from said light beam on said photographic media.

11. Apparatus for generating photographic media containing graphics images and images of alpha-numeric characters including:

data entry means for entering information corresponding to identity and position of a plurality of selected ones of said alpha-numeric characters to be placed on said photographic media;

data entry means for entering information corresponding to identity and position of graphics images to be placed on said photographic media;

storage means for storing said information;

processing means for converting said information into output signals representing said identity and position;

stationary photographic recording means for recording images of selected ones of said alpha-numeric characters and said graphics images onto said photographic media including means for holding said photographic media in position for light exposure, and shutter means for controlling the amount of light exposure of said photographic media;

a light source;

moveable image generating media having transparent and opaque regions in predetermined areas, said regions forming silhouettes of at least one set of said alpha-numeric characters, said moveable image generating media being responsive to a first portion of said output signals to position a selected one of said silhouettes such that light from said light source passes through said selected one of said silhouettes to form a shaped light beam;

image positioning means, including focusing means, responsive to a second portion of said output signals, for positioning and focusing said shaped light beam onto a selected area of said photographic media;

control means associated with said processing means for controlling said shutter means to produce an exposed image of an alpha-numeric character to graphic image from said light beam on said photographic media.

12. The apparatus of claim 11 wherein said apparatus additionally includes a filter wheel interposed between the light source between said light source and said photographic media.

13. The apparatus of claim 12 wherein said apparatus additionally includes an aperture wheel interposed between said light source and said photographic media for controlling the exposure of said photographic media.

14. Apparatus for generating photographic media containing images of alpha-numeric characters comprising:

data entry means for entering information corresponding to identity and position of a plurality of selected ones of said alpha-numeric characters to be placed on said photographic media;

storage means for storing said information;

processing means for converting said information into output signals representing identity and position;

stationary photographic recording means for recording images of selected ones of said alpha-numeric characters on to said photographic media including means for holding said photographic media in position for light exposure, and shutter means for controlling the time of light exposure of said photographic media; wherein said shutter means includes a liquid crystal shutter capable of attenuating light passing substantially perpendicularly through its faces;

a light source;

an image generating media capable of generating at least one set of said alpha-numeric characters, said image generating media being responsive to a first portion of said output signals to display at least one of said alpha-numeric characters such that light from said light source causes said image generating media to form a shaped light beam in the shape of said one of said alpha-numeric characters;

image positioning means, including focusing means, responsive to a second portion of said output signals, for positioning and focusing said shaped light beam onto a selected area of said photographic media;

control means associated with said processing means for controlling said shutter means to produce an exposed image of an alpha-numeric character from said light beam on said photographic media.

15. The apparatus of claim 14 wherein said image generating media includes a partially transparent high-resolution liquid crystal plate.

16. The apparatus of claim 14 wherein said apparatus additionally includes means for generating photographic media containing graphics images.

17. The apparatus of claim 15 wherein said apparatus additionally includes means for generating photographic media containing graphic images.

18. The apparatus of claim 14 wherein said shutter means additionally includes a capping blade means for completely attenuating said light beam.

19. The apparatus of claim 14 additionally including modulating means for modulating said liquid crystal shutter between a high transmissive state and a low transmissive state.

20. The apparatus of claim 19 wherein said modulating means is capable of maintaining said liquid crystal shutter in an intermediate state wherein the average transmissivity of said intermediate state is no greater than the transmissivity of said state of high optical transmissivity and no lower than the transmissivity of said state of low optical transmissivity.

21. A liquid crystal shutter system including a liquid crystal shutter having a first state and a second state wherein when said liquid crystal shutter is in said first state it is capable of transmitting a high percentage of light incident upon its surface and when said liquid crystal shutter is in said second state it is not capable of transmitting more than a small percentage of light incident upon its surface;

modulating means capable of modulating said liquid crystal shutter between said first state and said second state wherein said modulating means is capable of maintaining the transmission of light through said liquid crystal shutter at a continuously variable average level wherein said average level is greater than the transmission through said liquid crystal shutter when said liquid crystal shutter is in said second state and said average level is less than the transmission through said liquid crystal shutter when said liquid crystal shutter is in said first state.

22. Apparatus for generating photographic media containing graphics images including:

data entry means for entering information corresponding to identity, position and composition of said graphic images to be placed on said photographic media;

storage means for storing said information;

processing means for converting said information into output signals representing said identity, position and composition;

stationary photographic recording means for recording said graphic images on to said photographic media including means for holding said photographic media in position for light exposure, and shutter means for controlling the time and amount of light exposure of said photographic media;

a light source;

image generating media comprising a silhouette such that light from said light source passes through said silhouette to form a shaped light beam;

image positioning means, including focusing means, responsive to a first portion of said output signals, for positioning and focusing said shaped light beam onto a selected area of said photographic media;

control means associated with said processing means for controlling said shutter means to produce an exposed graphics image from said shaped light beam on said photographic media.

23. The apparatus of claim 22 wherein said shutter means comprises a liquid crystal shutter.

24. The apparatus of claim 23 additionally including modulating means for modulating said liquid crystal shutter between a state of high optical transmissivity and a state of low transmissivity.

25. The apparatus of claim 24 wherein said modulating means is capable of maintaining said liquid crystal shutter in an intermediate state wherein the average transmissivity of said intermediate state if no greater than the transmissivity of said state of high optical transmissivity and no lower than the transmissivity of said state of low optical transmissivity.

26. The system of claim 21 additionally including capping blade means for completely attenuating a beam of light incident upon both said liquid crystal shutter and said copping blade means.

44
26
25
49
84
30
48
31
28
46
42
201
54
52
36
50
40

FIG.1.

14
16
26
28
36
12
18
20
22
24
34
38
32

FIG. 2.

A
100
SET INTERNAL FLAGS OR PARAMETERS
112
RETURN TO E
114

FIG. 4B.

FIG.3A.

FIG.9B.

FIG.9A.

FIG.9C.

25
26
27

FIG. 3b.

3d
3d
28
30

FIG. 3d.

FIG. 3c.

SERIAL INTERFACE PORT
82
80
BUFFER
84
110
E
READ AN ASCII CHARACTER FROM THE BUFFER
86
IS CHARACTER A COMMAND CHARACTER ?
88
YES
90
NO
FETCH COMMAND STRING FROM BUFFER
92
PUT CHARACTER INTO TEXT BUFFER
108
VERIFY COMMAND VALIDITY
94
BRANCH ON COMMAND TYPE
96
PASSIVE COMMANDS
100
A
ACTIVE COMMAND
102
B
GRAPHICS COMMANDS
BRANCH ON COMMAND TYPE
98
SYSTEM COMMANDS
106
D
TEXT COMMANDS
C
104

FIG. 4A.

B
102
116
DRAW A CIRCLE
118
DRAW AN ARC
120
DRAW A BOX
122
DRAW A LINE
124
MOVE
EXPOSE FILM
126
MOVE FILTER WHEEL
128
MOVE CHARACTER WHEEL
130
MOVE APERTURE WHEEL
132
MOVE X-MOTOR
134
MOVE Y-MOTOR
136
DRIVE LIQUID CRYSTAL SHUTTER FOR PROPER EXPOSURE
138
RETURN TO E
140

FIG. 4C.

C
104
Y-MOTOR FIXED FOR EACH TEXT LINE
GET CHARACTER FROM BUFFER
140
BUILD "CHARACTER DATA RECORD" FOR EACH CHARACTER
142
(OPTION)
CHARACTER DATA RECORD:
-X AXIS POSITION
-POSITION ON CHAR. WHEEL
-CHARACTER WIDTH
-COLOR
-UNDERLINE ON/OFF
APPLY PROPORTIONAL SPACING AND KERNING RULES/TABLES
144
EXPOSURE ORDER DETERMINED BY POSITION OF CHARACTER ON CHARACTER WHEEL AND APERTURE WHEEL TO KEEP X-MOTOR MOVING IN A SINGLE DIRECTION
SORT-CHARACTER DATA RECORDS BY EXPOSURE ORDER
146
"DO-LINE"
GET A CHARACTER FROM THE SORTED LIST EXPOSE THE CHARACTER ON THE FILM
148
150
CHARACTER WHEEL
SPIN MOTOR
152
FILTER WHEEL
154
APERTURE WHEEL
MOVE X-MOTOR
156
DRIVE LIQUID CRYSTAL SHUTTER FOR PROPER EXPOSURE
158
160
NO
IS LINE COMPLETE ?
YES
162
RETURN TO E

FIG. 4D.

D
106
MOVE MOTORS AND SET POSITIONS
SYSTEM COMMANDS
-RESET (HAVE ALL MOTORS)
-NEW SLIDE
-END SLIDE
-ENITIALIZE
X-MOTOR
164
Y-MOTOR
166
PANEL LIGHTS
168
CAMERA MOTOR
170
ADVANCE FILM
OPEN/CLOSE CAMERA SHUTTER
LIGHT SOURCE
172
LIQUID CRYSTAL SHUTTER
174
RETURN TO E
176

FIG. 4E.

X,Y-MOTOR AND CHARACTER WHEEL MOVEMENT

MICRO PROCESSOR (INTEL 8085)
X,Y LOCATION
STATUS
SLAVE PROCESSOR (INTEL 8051)
72
70
X-MOTOR
50
Y-MOTOR
52
CHARACTER WHEEL
48

FIG. 5.

CLOCK INTERRUPT FUNCTION ROUTINE

240
REAL TIME CLOCK INTERRUPT
242
CHECK FOR NEW DATA ON SERIAL PORT AND PROCESS IT
244
SERVICE MOTORS
246
FILTER WHEEL
248
CHARACTER WHEEL
250
APERTURE WHEEL
252
RETURN

FIG. 6.

0219264

201
209
207
221
217
223
211
36
219
205
217
219
211
209

FIG. 7.

219
217
205

FIG.8A.

219
217
205

FIG.8B.

219
213
217
205

FIG.8C.

217
215
211
213

FIG.8D.

FIG.10.
B
304
OPEN O
300
LIGHT ATTENUATION BY SHUTTER
320
306
A
CLOSED
322
0
$t_0$
$t_1$
$t_2$
306
$t_3$
$t_4$
$t_5$
308
310
312
TIME
314
316
318

24
276
274
232
270
49
294
48
272
296
FIG.11A.
FIG.11E.
SIGNAL 'C'
294
290
SENSOR A
III
288
II
286
X
292
SENSOR B
284
I
RESULTANT DIGITAL SIGNAL
I
282
II
III
IMAGED SLIT
278
SENSOR A
SENSOR B
280
278
282
280
282
FIG.11B.
FIG.11C.
FIG.11D.

FIG.12-1 $\frac{m_2}{m_1} = \frac{\Delta Y}{\Delta X}$

FIG.12-2 $m_1 = \frac{10^6}{n_x r_x}$ [in./sec.]

FIG.12-3 $m_2 = \frac{10^6}{n_y r_y}$ [in./sec.]

FIG.12-4 $S = \sqrt{m_1^2 + m_2^2}$

FIG.12-5 $n_x = \frac{10^6}{r_x} \cdot \frac{\sqrt{\Delta X^2 + \Delta Y^2}}{S \Delta X}$

FIG.12-6 $n_y = \frac{10^6}{r_y} \cdot \frac{\sqrt{\Delta X^2 + \Delta Y^2}}{S \Delta Y}$

FIG.12-7A $\dot{X} = -Y \; ; \; \dot{Y} = X$

FIG.12-7B $\dot{X} = -\frac{S}{R} Y \; ; \; \dot{Y} = \frac{S}{R} X$

FIG.12-8

$$\dot{x}(t) = -\frac{S}{R} y(t) \; ; \; \dot{y}(t) = \frac{S}{R} x(t)$$

$$x(t+\Delta t) = \dot{x}(t)\Delta t + x(t)$$

$$y(t+\Delta t) = \dot{y}(t)\Delta t + y(t)$$

FIG.12-9

$x(0) = x_0$

$y(0) = y_0$ such that $x_0^2 + y_0^2 = R^2$

FIG.12-10

$n_x = \frac{10^6}{\dot{x}k}$ [μsec/μstep]

$n_y = \frac{10^6}{\dot{y}k}$ [μsec/μstep]

FIG.12-11

The period of each step for the x motor = $n_x(t)$

The period of each step for the y motor = $n_y(t)$

European Patent Office

# EUROPEAN SEARCH REPORT

0219264

Application number

EP 86 30 7517

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | DE-A-2 811 280 (AGFA-GEVAERT) * complete document * | 1,11, 14,22 | G 03 B 17/24 |
| A | | 2-4,12 ,16,17 | |
| | --- | | |
| Y | DE-A-3 034 161 (ROBOT PHOTO UND ELECTRONIC) * claims 1-12; figure 1 * | 1,11, 14,22 | |
| | --- | | |
| Y | PATENT ABSTRACTS OF JAPAN, vol. 6, no. 100 (P-121)[978], 9th June 1982; & JP - A - 57 32432 (OLYMPUS KOGAKU KOGYO) 22-02-1982 | 1,11, 14,22 | |
| | --- | | TECHNICAL FIELDS SEARCHED (Int Cl 4) |
| Y | PATENT ABSTRACTS OF JAPAN, vol. 8, no. 171 (P-293)[1608], 8th August 1984; & JP - A - 59 67520 (SHIOJIRI KOGYO) 17-04-1984 | 1,11, 14,22 | B 41 B 17/00<br>B 41 B 21/00<br>G 03 B 17/00<br>G 03 B 27/00<br>G 03 C 11/00 |
| | --- | | |
| A | PATENT ABSTRACTS OF JAPAN, vol. 7, no. 5 (M-184)[1150], 11th January 1983; & JP - A - 57 - 165 260 (MORISAWA) 12-10-1982 | 1 | |
| | --- | | |
| A | US-A-4 165 932 (S. ASANO et al.) * figures 1, 5, 6 * | 1 | |
| | --- -/- | | |

The present search report has been drawn up for all claims

| Place of search | Date of completion of the search | Examiner |
|---|---|---|
| BERLIN | 10-12-1986 | HOPPE H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82

European Patent Office

# EUROPEAN SEARCH REPORT

Application number

EP 86 30 7517



## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-2 652 755 (R. HIGONNET et al.)<br>* figures 1, 3 *<br>----- | 1 | |

TECHNICAL FIELDS SEARCHED (Int Cl 4)

The present search report has been drawn up for all claims

| Place of search | Date of completion of the search | Examiner |
|---|---|---|
| BERLIN | 10-12-1986 | HOPPE H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document